# EUROPEAN PATENT APPLICATION

(11) **EP 3 744 901 A1**
(43) Date of publication of application: **02.12.2020**
(21) Application number: 19743304.8
(22) Date of filing: 21.01.2019
(51) Int. Cl.: E02D 17/20

(54) **VEGETATION PARTITION WIRE MESH INCLUDING NONWOVEN FABRIC, AND SLOPE GREENING METHOD USING SAME**

(30) Priority: 23.01.2018 KR 20180008316
(71) Applicant: GREEN SPACE CO., LTD., Soi-myeon Eumseong-gun, Chungcheongbuk-do 27709 (KR)
(72) Inventor: HAN, Nam Soo, Yangpyeong-gun Gyeonggi-do 12503 (KR)
(74) Representative: Arth, Hans-Lothar
(86) International application number: PCT/KR2019/000819
(87) International publication number: WO 2019/146972

(57) **Abstract**

The present invention relates to a vegetation partition wire mesh, which is provided in the vicinity of shores, coasts or roads, and which includes: an outer wire mesh 110 formed by upwardly bending both left and right ends of a planar wire mesh; a plurality of first partition wire meshes 210 formed by upwardly bending both front and rear ends of the planar wire mesh, wherein the first partition wire meshes are accommodated and fixed inside the outer wire mesh while forming outer walls at both front and rear ends of the outer wire mesh 110, as well as a plurality of inner barriers; an outer wire mesh nonwoven fabric 115 provided along the inner surface of the outer wire mesh 110 so as to cover the outer wire mesh 110; a first partitioning nonwoven fabric 215 provided along inner surfaces of the upwardly bent portions of the first partition wire meshes 210 so as to cover the upwardly bent portions of the first partition wire meshes 210; and green soil 410, which is a mixture of soil and seeds and is spread at a high pressure in order to fill the inside of the outer wire mesh 110 divided into a plurality of spaces.

## Description

### Field of Invention

The present invention relates to a partition wire mesh for vegetation installed on a shore, a coast or a slope surface of cut area around a road ("road embankment"), more particularly, to provision of a partition wire mesh for vegetation constructed by installing bent partition wire nets inside a bent outer wire mesh and then covering the same with green soil 410 containing seeds at a high pressure, thereby preventing loss of the spread soil and ensuring convenience and economic efficiency of the construction.

### Background of Invention

When constructing a new road or cutting through hilly land, an embankment occurs by cutting the natural terrain. Greening methods conducted to prevent soil loss on such an embankment include seed spraying, laying rice straw, green soil works, mattress gabion installation, etc.

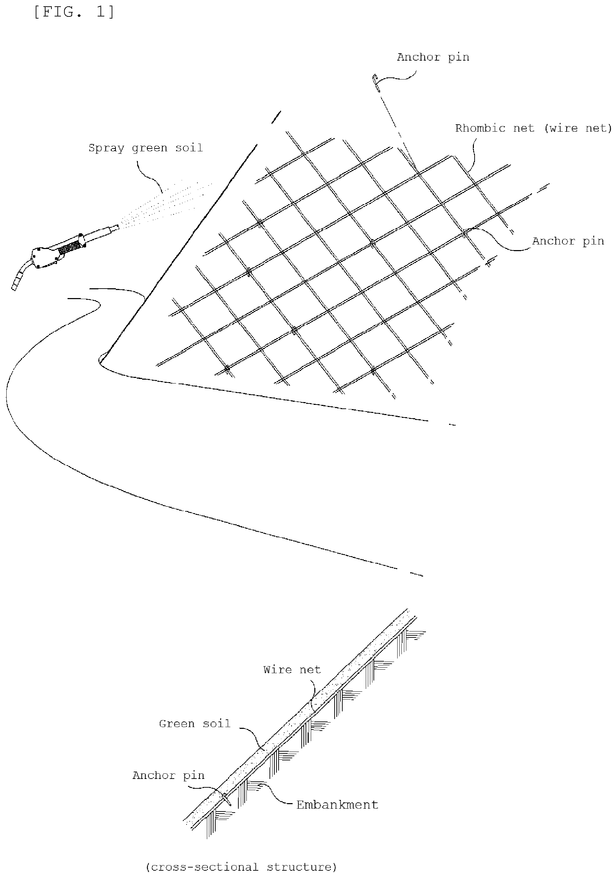

There among, the green soil works currently used as a representative method are performed, as shown in FIG. 1, by covering the embankment with rhombic nets (wire mesh), fixing the same on the ground with anchor pins, and then, covering the top surface thereof with green soil as a mixture of soil and seeds at a high pressure to form a desired thickness (10 to 15 cm) so as to adsorb the green soil to an embankment, which is well maintained after completion of public works, without erosion.

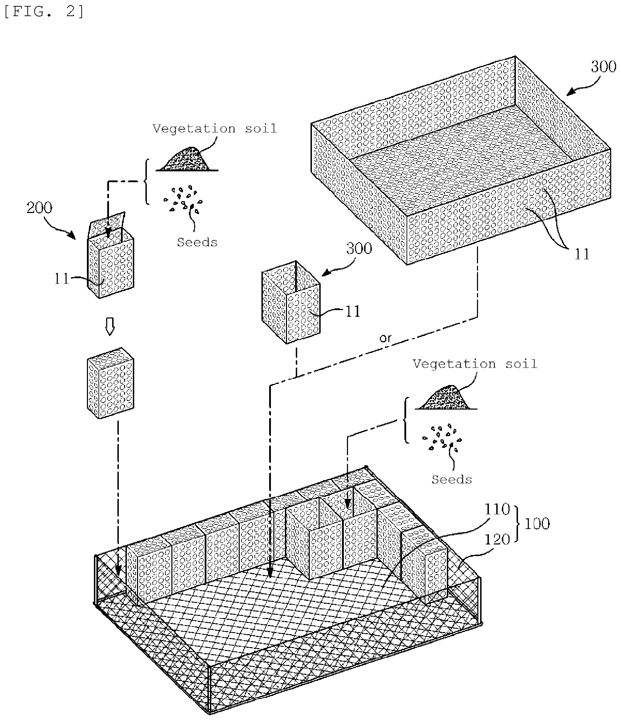

However, the conventional green soil works as described above entail a problem of readily eroding due to heavy rain, although herbaceous plants may be deposited on the ground surface. In case of erosion, repairing construction is required, as shown in FIG. 2, in such a way that: a rectangular wire net in a cubical form ("quadrangular wire net") is installed and then the inside of the wire net is filled with gravel or various vegetation bags. Alternatively, although not shown in FIG. 2, after disposing a seed germination sheet on top of the vegetation bag filled in the quadrangular wire net, a cover wire net may be coupled to the sheet.

However, such a quadrangular wire net type mattress construction entails a problem that, although vegetation is possible, a sewing process of each vegetation bag and a process of putting multiple vegetation bags one by one inside the quadrangular wire net are required, thus causing increase in working time and costs.

### Prior Art Literature

Korean Patent Application No. 10-2011-0128576
Korean Patent Application No. 10-2014-0109635

### Summary of Invention

### Technical Problem to be Solved

The present disclosure has been proposed to overcome the aforementioned problems, and an object of the present disclosure is as follows.

First, it is an object of the present invention to provide a new partition wire mesh for vegetation and a greening method that can effectively prevent loss of green soil for vegetation.

Second, it is another object of the present invention to provide a new partition wire mesh for vegetation and a greening method that can dramatically increase economic efficiency and convenience by simplifying the manufacturing and construction processes.

Third, it is still a further object of the present invention to provide a new vegetation wire mesh and a greening method that omit a process of placing and fixing anchors on desired sites and a compaction process of the spread soil.

### Technical Solution

In order to accomplish the above purposes, technical configurations of the present invention are as follows.

The present invention provides a partition wire mesh for vegetation installed on a shore, a coast or an inclined surface around a road, which includes: an outer wire mesh 110 formed by upwardly bending both left and right ends of a planar wire net; a plurality of first partition wire meshes 210 formed by upwardly bending both front and rear ends of a planar wire net, wherein the first partition wire meshes are accommodated and fixed inside the outer wire mesh while forming outer walls at both front and rear ends of the outer wire mesh, as well as a plurality of inner barriers; an outer wire mesh nonwoven fabric 115 provided along an inner surface of the outer wire mesh 110 so as to cover the outer wire mesh 110; a first partitioning nonwoven fabric 215 provided along inner surfaces of upwardly bent portions of the first partition wire meshes 210 so as to cover the upwardly bent portions of the first partition wire meshes 210; and green soil 410 which is a mixture of soil and seeds and is spread at a high pressure in order to fill the inside of the outer wire mesh 110 divided into a plurality of spaces.

### Effect of Invention

Functional effects of the technical configurations of the present invention are as follows.

First, there is no need to separately manufacture a vegetation bag, fill the inside with soil and then sew the vegetation bag, and further to stack the vegetation bag inside a wire mesh, thereby shortening a construction period and greatly reducing construction costs.

Second, the outer wire mesh 110, first partition wire meshes 210 or second partition wire meshes 220 used herein may be pre-bent and mutually coupled in accordance with the conditions of the site, thereby reducing costs for manufacturing a quadrangular wire net and improving construction efficiency.

Third, after coupling the outer wire mesh 110 and the first partition wire meshes 210, the green soil 410 containing seeds may be spread in inner spaces of the above meshes at a high pressure using an apparatus to fill the meshes with the soil, thereby enabling quick covering while eliminating an additional compaction process typically offered after soil covering.

Fourth, after completing green soil covering and then putting an upper nonwoven fabric 320 thereon, the upper nonwoven fabric 320 and the outer wire mesh nonwoven fabric 115, or the upper nonwoven fabric 320 and the first partitioning nonwoven fabric 215 are ultrasonically welded to prevent loss of the spread green soil 410 and offer substantially the same effects as that of separately manufactured and installed vegetation bags.

Fifth, after putting a coir mattress 330 and a cover wire net 310 on the partition wire mesh, the cover wire net 310 and a top end of the outer wire mesh 110 or the cover wire net 310 and top ends of the first partition wire meshes 210 are mutually coupled, and the outer wire mesh 110 is installed on an inclined surface such that plural outer wire meshes are successively arranged, thereby ensuring structural stability without additional anchoring.

### Brief Description of Drawings

FIG. 1 and FIG. 2 illustrate the prior art.
FIG. 3 is a perspective view illustrating a main configuration of a specific embodiment of the present invention.
FIG. 4 illustrates a process of landscaping according to the present invention.
FIG. 5 illustrates a case where a seed germination sheet 340 is used.

### [Description of symbols]

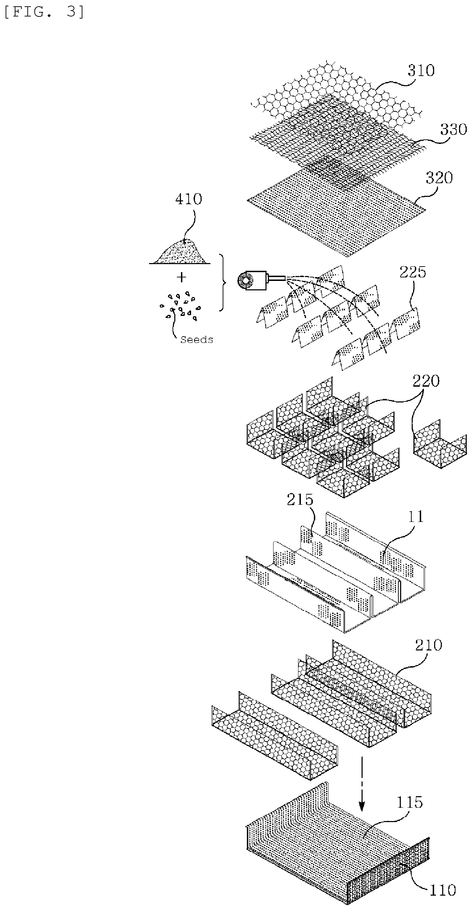

The following numerals are applied only to the figures according to the present invention (FIG. 3 to FIG. 5), and are not related to FIG. 1 and FIG. 2 illustrating the prior art.
110: Outer wire mesh
115: Outer wire mesh nonwoven fabric
210: First partition wire meshes
215: First partitioning nonwoven fabric
220: Second partition wire meshes
225: Second partitioning nonwoven fabric
310: Cover wire net
320: Upper nonwoven fabric
330: Coir mattress
340: Seed germinationsheet
345: Pulp layer
410: Green soil
11: Vegetation hole
22: Protective cover

### Detailed Description of Preferred Embodiments of Invention

Hereinafter, specific embodiments of the present invention will be described in detail with reference to the accompanying drawings.

The present invention relates to a partition wire mesh for vegetation installed on a shore, a coast or a road embankment, and its main structure is shown in FIG. 3.

An outer wire mesh 110 has a construction in which both left and right side ends of a planar wire net are bent upward. Herein, a size of the net constituting the outer wire mesh 110 may be appropriately selected in consideration of field conditions.

An outer wire mesh nonwoven fabric 115 is disposed along an inner surface of the outer wire mesh 110 to cover the same, and may serve to prevent loss of the spread green soil 410 along with the outer wire mesh 110.

The outer wire mesh nonwoven fabric 115 is provided with many vegetation holes 11 perforated within an extent to prevent loss of the green soil 410, so as to facilitate rooting of plant roots and smooth exchange of oxygen, moisture and nutrients with the outside.

The first partition wire meshes 210 have a construction in which both front and rear ends of a planar wire net are bent upward. Herein, a size of the net constituting the first partition wire meshes 210 may be appropriately selected in consideration of field conditions.

The first partition wire meshes 210 are accommodated and fixed inside the outer wire mesh 110 while forming outer walls at both front and rear ends of the outer wire mesh 110, as well as a plurality of inner barriers.

Although not shown separately in the drawings, each first partition wire mesh 210 is coupled with the outer wire mesh 110 using a hog ring or other binding wire so as to be fixed thereto.

The first partitioning nonwoven fabric 215 is provided along an inner surface of upwardly bent portion of the first partition wire mesh 210 to cover the upwardly bent portion. The first partitioning nonwoven fabric 215 may have a construction in which only the upwardly bent portion is covered. Alternatively, as shown in FIG. 3, a single nonwoven fabric may be used to cover the bottom surface as well as the upwardly bent portion.

Depending upon the size of the outer wire mesh 110 or the first partition wire meshes 210, a second partition wire mesh 220 may be further added. In this regard, the second partition wire mesh 220 may have a construction in which both left and right ends of a planar wire net are bent upward, wherein the second partition wire mesh 220 is accommodated and fixed in each of the first partition wire meshes 210 while forming inner barriers in the first partition wire mesh 210.

Further, a size of the wire net constituting the second partition wire mesh 220 may be appropriately selected in consideration of field conditions.

Although not shown separately in the accompanying drawings, the second partition wire mesh 220 and the first partition wire mesh 210 may also be mutually coupled using a hog ring or other binding wire.

The second partitioning nonwoven fabric 225 is provided along an inner surface of upwardly bent portion of the second partition wire mesh 220 to cover the upwardly bent portion. As shown in FIG. 3, the second partitioning nonwoven fabric may have a construction in which only the upwardly bent portion is covered. Alternatively, although not shown separately in the accompanying drawing, a single nonwoven fabric may be used to cover the bottom surface as well as the upwardly bent portion.

The outer wire mesh nonwoven fabric 115, the first partitioning nonwoven fabric 215 and the second partitioning nonwoven fabric 225 may stably keep the green soil 410 spread in partitioned compartments in order to fill the inside of the outer wire mesh 110, thereby serving to prevent loss of the green soil 410.

Both the first partitioning nonwoven fabric 215 and the second partitioning nonwoven fabric 225 do not necessarily have vegetation holes 11 unlike the outer wire mesh nonwoven fabric 115. However, in consideration of different field conditions, each of the above fabrics may be provided with a plurality of perforated vegetation holes like the outer wire nonwoven fabric 115.

The green soil 410 is soil for covering. More particularly, the green soil may be spread inside the outer wire mesh 110 at a high pressure in order to fill the inside of the outer wire mesh 110, wherein the outer wire mesh 110 is partitioned into multiple compartments since the first partition wire meshes 210 or the first partition wire meshes 210 and the second partition wire meshes are installed together in the outer wire mesh 110.

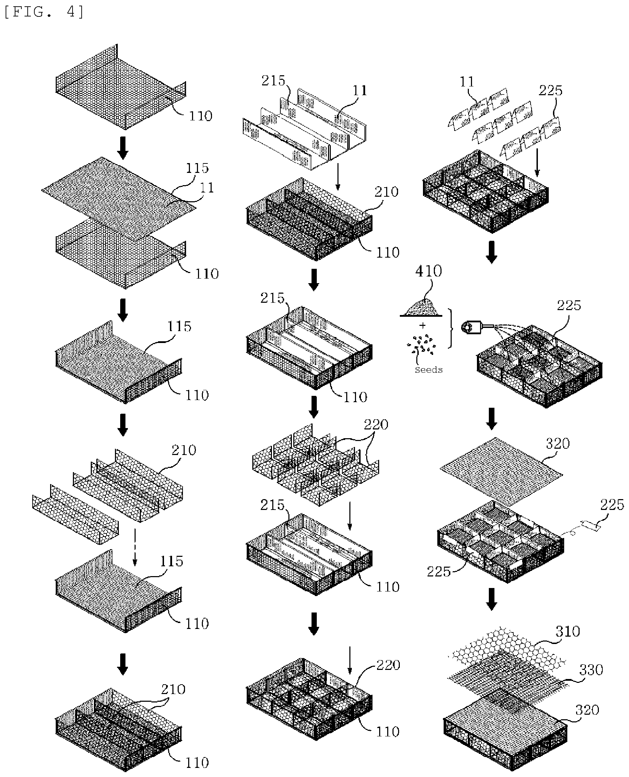

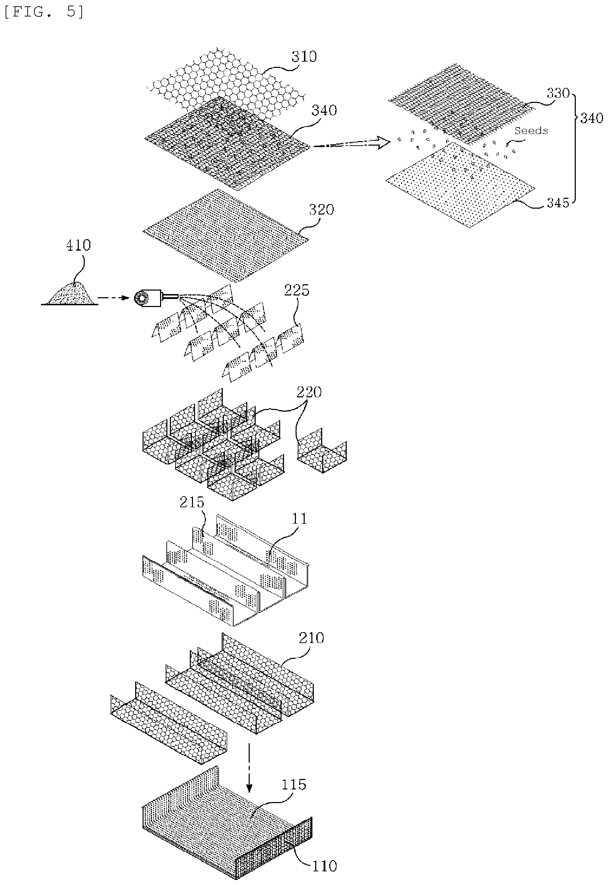

As shown in FIG. 3 or FIG. 4, the green soil 410 and seeds may be mixed and spread. Otherwise, as shown in FIG. 5, a method of separately installing a seed germination sheet 340 including the seeds may be adopted.

As such, since the wire meshes are filled with the green soil 410 using any covering equipment at a high pressure, a separate compaction process is not needed after covering. Such high-pressure covering equipment may be appropriately selected among commercially available apparatuses to conduct covering according to the manual of the selected one.

An upper nonwoven fabric 320 may cover a top surface of the outer wire mesh 110 covered and filled with the green soil 410, wherein the upper nonwoven fabric 320 is heat-welded and fixed to the outer wire mesh nonwoven fabric 115, the first partitioning nonwoven fabric 215 and the second partitioning nonwoven fabric 225, respectively.

Heat welding may be performed using an ultrasonic welder, a laser welder, a near-infrared heat welder, or the like.

In order to smoothly conduct the heat welding, foreign matter such as green soil should not be present at a contact portion between the upper nonwoven fabric 320 and the outer nonwoven fabric nonwoven fabric 115, a contact portion between the upper nonwoven fabric 320 and the first partitioning nonwoven fabric 215, a contact portion between the upper nonwoven fabric 320 and the second partitioning nonwoven fabric 225, etc. Therefore, in a process of spreading the green soil410, a protective cover 22 having a cross-section in the "Λ" shape is installed along a top end of each of the outer wire mesh nonwoven fabric 115, the first partitioning nonwoven fabric 215 and the second partitioning nonwoven fabric 22 and, after completing covering, the protective cover 22 is preferably removed before heat welding of the upper nonwoven fabric 320. Moreover, a plurality of vegetation holes 11 may also be perforated in the upper nonwoven fabric 320.

A coir mattress 330 is used to cover the top of the upper nonwoven fabric 320.

The coir mattress 330 along with the upper nonwoven fabric 320 may prevent loss of the green soil 410 until vegetation is activated. The mattress may also absorb and retain water for a certain period of time to ensure smooth initial vegetation. In addition, the coir mattress 330 may effectively protect the upper nonwoven fabric 320 from ultraviolet rays until it is corroded and organically deposited (taking approximately 5 years), and may help growth of plants while eventually degrading into organic matter.

Such a coir mattress 330 is typically manufactured using lawn carpet or coconut shell. If necessary, a jute fabric made of jute or the like may be used.

FIG. 5 illustrates a case where the seed germination sheet 340 is also used instead of using the coir mattress alone. As such, when using the seed germination sheet 340, the green soil is not admixed with seeds.

The seed germination sheet 340 may cover the top of the upper nonwoven fabric 320.The seed germination sheet 340 is composed of a pulp layer 345 on which seeds are spread and a coir mattress 330 integrated with a top surface of the pulp layer 345 including the seeds.

The pulp layer 345 is made of fiber extracted from the plant and preferably contains a humectant such as Terracottem together with a fertilizer, in order to aid germination of the plant.

Terracottem has a specific gravity of about 800kg/m² and a water absorption capacity of about 200 times its own weight so that water can be adequately supplied for plant survival even during a drought or in water-deficient soil. Further, Terracottem is an overall soil humectant in a specific granular form, which includes a mixture of inorganic nutrients, a growth promoter and electrolytes, thereby decreasing fertilizer usage by more than 50%. Further, the above humectant may increase ventilation and drainage, block excessive salt and impurities, increase rooting ability, shorten a planting time and reduce a withering rate, thereby improving a growth rate of the plant.

The cover wire net 310 is disposed on top of the coir mattress 330 or on top of the seed germination sheet 340 including the coir mattress 330, and is coupled to the top ends of the outer wire mesh 110 and the first partition wire meshes 210 to complete a box type vegetation wire mesh while preventing escape of internal components.

If necessary, the cover wire net may also be coupled to the top ends of the second partition wire meshes 220.

Landscaping on an inclined surface using such a partition wire mesh for vegetation, including a nonwoven fabric as described above, is performed by the processes shown in FIG 4.

### (1) Step 1

After grading of the inclined surface, plural outer wire meshes 110 vertically bent at right and left ends thereof are installed in close contact with one another.

### (2) Step 2

A process of disposing an outer wire mesh nonwoven fabric 115 along an inner surface of the outer wire mesh 110is conducted.

The outer wire mesh nonwoven fabric 115 may be provided one by one for each of the outer wire meshes 110 or, although not shown separately in the accompanying drawings, a single outer wire mesh nonwoven fabric 115 may be provided to be continuously connected along a plurality of outer wire meshes 110 arranged close to one another.

In addition, although not shown separately in the accompanying drawings, when a plurality of outer wire mesh nonwoven fabrics is sequentially laid, the neighboring outer wire mesh nonwoven fabrics 115 are preferably arranged to overlap each other at a predetermined width, so as to prevent loss of green soil 410.

### (3) Step 3

A process of installing first partition wire meshes 210 inside the outer wire mesh 110 and then mutually coupling and fixing the same is conducted, wherein these wire meshes are coupled and fixed by, for example, a hog ring or other binding wire.

According to this process, plural compartments partitioned by barriers, and front and rear outer walls are formed in an inner space of the outer wire mesh 110.

### (4) Step 4

A process of providing a first partitioning nonwoven fabric 215 along an inner surface of the upwardly bent portion of the first partition wire mesh 210 to cover the upwardly bent portion is conducted.

The first partitioning nonwoven fabric 215 is disposed along the inner surface of the upwardly bent portion of the first partition wire mesh 210 to cover the upwardly bent portion. In this regard, the first partitioning nonwoven fabric 215 may have a construction in which only the upwardly bent portion is covered or, as shown in FIG. 3 or FIG. 4, a single nonwoven fabric may be used to cover the bottom surface as well as the upwardly bent portion.

### (5) Step 5

Second partition wire meshes 220 are installed inside the first partition wire meshes 210, and are mutually coupled and fixed by, for example, a hog ring or other binding wire.

### (6) Step 6

A second partitioning nonwoven fabric 225 is disposed along an inner surface of the upwardly bent portion of the second partition wire mesh 220 to cover the upwardly bent portion. As shown in FIG. 3 or FIG. 4, only the upwardly bent portion may be covered or, although not shown separately in the accompanying drawings, a single nonwoven fabric may be used to cover the bottom surface as well as the upwardly bent portion.

### (7) Step 7

A process of spreading green soil 410 containing seeds at a high pressure to fill the inside of the outer wire mesh 110 partitioned into a plurality of spaces with the green soil is conducted.

According to this process, all of the compartments in the outer wire mesh 110 may be filled with the green soil 410.

### (8) Step 8

A process of putting an upper nonwoven fabric 320 on top of the outer wire mesh 110 covered with the green soil 410is conducted, followed by heat welding the same to the outer wire mesh nonwoven fabric 115, the first partitioning nonwoven fabric 215 and the second partitioning nonwoven fabric 225.

After covering the outer wire mesh with the upper nonwoven fabric 320, a top end of the outer wire mesh nonwoven fabric 115, a top end of the first partitioning nonwoven fabric 215 and a top end of the second partitioning nonwoven fabric 224, which are in contact with the upper nonwoven fabric 320, may be connected through heat welding. According to such processes, the inner space surrounded by the nonwoven fabrics may be filled with the green soil 410 to thus serve as a nonwoven fabric vegetation bag.

As shown in FIG. 4, the green soil 410 may be formed by mixing soil and seeds together. Alternatively, although not shown separately in the accompanying drawings, only the seedless soil may be spread to form the green soil 410.

### (9) Step 9

When the green soil 410 formed by mixing soil and seeds is spread, the coir mattress 300 is put on top of the upper nonwoven fabric 320, a process of putting a cover wire net 310 on top of the coir mattress 330 and then coupling a top end of the cover wire net 310 to a top end of the outer wire mesh 110 by a binding wire is conducted. If necessary, the cover wire net may also be coupled to the first partition wire meshes 210 or the second partition wire meshes 220. When the green soil 410 not admixed with seeds is spread, as shown in FIG. 5, a process of putting the seed germination sheet 340 on top of the upper nonwoven fabric 320, putting the cover wire net 310 on top of the seed germination sheet 340 and then coupling the cover wire net 310 to the top end of the outer wire mesh 110 by a binding wire is conducted. If necessary, the cover wire net may also be coupled to the first partition wire meshes 210 or the second partition wire meshes 220.

According to the above processes, the greening method of inclined surfaces is completed.

While the present invention has been concretely described with reference to exemplary embodiments thereof, it is clearly understood that the scope of the present invention is not limited to such embodiments and various design alterations, addition or deletion of known art, simple limitation of numerical values without changing subject matters of the present invention may also be within the scope of the present invention.

## Claims

1. A partition wire mesh for vegetation provided with a nonwoven fabric and installed on a shore, a coast or an inclined surface around a road, comprising:
an outer wire mesh (110) formed by upwardly bending both left and right ends of a planar wire net;
a plurality of first partition wire meshes (210) formed by upwardly bending both front and rear ends of a planar wire net, wherein the first partition wire meshes are accommodated and fixed inside the outer wire mesh (110) while forming outer walls at both front and rear ends of the outer wire mesh (110), as well as a plurality of inner barriers;
an outer wire mesh nonwoven fabric (115) provided along an inner surface of the outer wire mesh (110) so as to cover the outer wire mesh (110);
a first partitioning nonwoven fabric (215) provided along inner surfaces of upwardly bent portions of the first partition wire meshes (210) so as to cover the upwardly bent portions of the first partition wire meshes (210); and
green soil (410) which is a mixture of soil and seeds and is spread at a high pressure in order to fill the inside of the outer wire mesh (110) divided into a plurality of spaces.

2. The partition wire mesh according to claim 1, further comprising:
a second partition wire mesh (220) formed by upwardly bending both left and right ends of a planar wire net, wherein the second partition wire mesh (220) is accommodated and fixed in each of the first partition wire meshes (210) while forming inner barriers inside the first partition wire mesh (210); and
a second partitioning nonwoven fabric (225) disposed along an inner surface of an upwardly bent portion of the second partition wire mesh 220 to cover the upwardly bent portion of the second partition wire mesh (220),
wherein the second wire mesh and the second partitioning nonwoven fabric are provided before spreading the green soil (410).

3. The partition wire mesh according to claim 1 or 2, further comprising:
an upper nonwoven fabric (320) which covers a top surface of the outer wire mesh (110) covered and filled with the green soil (410), wherein the upper nonwoven fabric is heat-welded and fixed to the outer wire mesh nonwoven fabric 115 and the first partitioning nonwoven fabric (215).

4. The partition wire mesh according to claim 3, wherein the green soil (410) is prepared by mixing soil and seeds and then spread, and wherein the partition wire mesh further comprises:
a coir mattress (330) to cover a top surface of the upper nonwoven fabric (320); and
a cover wire net (310) provided on top of the coir mattress (330) and then fixed to top ends of the outer wire mesh (110) and the first partition wire meshes (210).

5. The partition wire mesh according to claim 4, wherein each of the outer wire mesh nonwoven fabric 115 and the upper nonwoven fabric (320) is provided with a plurality of perforated vegetation holes 11.

6. The partition wire mesh according to claim 3, further comprising:
a seed germination sheet 340 to cover a top surface of the upper nonwoven fabric (320); and
a cover wire net (310) provided on top of the seed germination sheet (340) and then fixed to top ends of the outer wire mesh (110) and the first partition wire meshes (210),
wherein the seed germination sheet (340) is composed of:
a pulp layer (345) on which seeds are spread; and
a coir mattress (330) integrated with a top surface of the pulp layer (345) including the seeds.

7. A greening method of an inclined surface using the partition wire mesh for vegetation provided with a nonwoven fabric as set forth in claim 4 or 5, comprising:
a first process of installing a plurality of outer wire meshes (110) to be in close contact with one another after grading of the inclined surface;
a second process of disposing an outer wire mesh nonwoven fabric 115 along an inner surface of the outer wire mesh (110);
a third process of installing a first partition wire mesh 210 inside the outer wire mesh (110) and then coupling and fixing the same;
a fourth process of disposing a first partitioning nonwoven fabric (215) along an inner surface of the upwardly bent portion of the first partition wire mesh (210);
a fifth process of installing a second partition wire mesh 220 inside the first partition wire mesh (210) and then coupling and fixing the same;
a sixth process of disposing a second partitioning nonwoven fabric 225 along an inner surface of the upwardly bent portion of the second partition wire mesh (220);
a seventh process of spreading green soil (410) including seeds at a high pressure to fill the inside of the outer wire mesh (110) partitioned into a plurality of spaces with the green soil; and
an eighth process of putting an upper nonwoven fabric 320 on top of the outer wire mesh (110) covered with the green soil (410), followed by heat welding portions thereof in contact with top ends of the outer wire mesh nonwoven fabric (115), the first partitioning nonwoven fabric (215) and the second partitioning nonwoven fabric (225).

8. The greening method according to claim 7, further comprising a ninth process of putting a coir mattress (330) on top of the upper nonwoven fabric (320), putting a cover wire net (310) on top of the coir mattress (330), and then coupling a top end of the cover wire net 310 to a top end of the outer wire mesh (110).

9. A greening method of an inclined surface using the partition wire mesh for vegetation provided with a nonwoven fabric as set forth in claim 6, comprising:
a first process of installing a plurality of outer wire meshes (110) to be in close contact with one another after grading of the inclined surface;
a second process of disposing an outer wire mesh nonwoven fabric (115) along an inner surface of the outer wire mesh (110);
a third process of installing a first partition wire mesh (210) inside the outer wire mesh (110) and then coupling and fixing the same;
a fourth process of disposing a first partitioning nonwoven fabric (215) along an inner surface of the upwardly bent portion of the first partition wire mesh (210);
a fifth process of installing a second partition wire mesh 220 inside the first partition wire mesh (210) and then coupling and fixing the same;
a sixth process of disposing a second partitioning nonwoven fabric (225) along an inner surface of the upwardly bent portion of the second partition wire mesh (220);
a seventh process of spreading green soil (410) excluding seeds at a high pressure to fill the inside of the outer wire mesh (110) partitioned into a plurality of spaces with the green soil;
an eighth process of putting an upper nonwoven fabric 320 on top of the outer wire mesh (110) covered with the green soil (410), followed by heat welding portions thereof in contact with top ends of the outer wire mesh nonwoven fabric 115, the first partitioning nonwoven fabric (215) and the second partitioning nonwoven fabric (225); and
a ninth process of putting a seed germination sheet (340) on top of the upper nonwoven fabric (320), putting a cover wire net 310 on top of the seed germination sheet (340), and then coupling a top end of the cover wire net (310) to a top end of the outer wire mesh (110),
wherein the seed germination sheet (340) is composed of:
a pulp layer (345) on which seeds are spread; and
the coir mattress (330) integrated with a top surface of the pulp layer (345) including the seeds.
